# EUROPÄISCHE PATENTSCHRIFT

(11) **EP 1 198 518 B1**
(45) Veröffentlichungstag und Bekanntmachung des Hinweises auf die Patenterteilung: **20.09.2006**
(21) Anmeldenummer: 00954470.1
(22) Anmeldetag: 11.07.2000
(51) Int. Cl.: C08L 67/08, C08J 3/24, D06N 3/16

(54) **VERFAHREN ZUR HERSTELLUNG VON FLÄCHENGEBILDEN AUS NACHWACHSENDEN ROHSTOFFEN**
METHOD FOR PRODUCING FLAT ARTICLES FROM RENEWABLE RAW MATERIALS
PROCEDE POUR PRODUIRE DES ARTICLES PLATS A PARTIR DE MATIERES PREMIERES RENOUVELABLES

(30) Priorität: 21.07.1999 DE 19934036
(43) Veröffentlichungstag der Anmeldung: 24.04.2002
(73) Patentinhaber: DLW Aktiengesellschaft, D-74321 Bietigheim-Bissingen (DE)
(72) Erfinder: FISCHER, Bernd, D-71546 Aspach (DE); HAMANN, Heiko, D-74392 Freudental (DE); MAUK, Hans-Jörg, D-74395 Mundelsheim (DE); ESS, Miko, D-71691 Freiburg (DE); KASTL, Bernd, D-74321 Bietigheim-Bissingen (DE)
(74) Vertreter: Müller-Boré & Partner Patentanwälte
(86) Internationale Anmeldenummer: PCT/EP2000/006573
(87) Internationale Veröffentlichungsnummer: WO 2001/007519

(56) Entgegenhaltungen:
- EP-A- 0 377 258
- EP-A- 0 539 916
- DE-A- 19 757 591
- DATABASE WPI Week 3199 Derwent Publications Ltd., London, GB; AN 1999-367127 XP002154755 "Radiation curable coating composition, e. g. for metal cans" & JP 11 140160 A (TOYO INK), 25. Mai 1999 (1999-05-25)

## Beschreibung

Die vorliegende Erfindung betrifft ein Verfahren zur Herstellung eines Flächengebildes mit einem Polyreaktionsprodukte-enthaltenden Material, umfassend das Vorvernetzen einer Mischung eines Epoxidierungsprodukts von mindestens einem Carbonsäureester mit mindestens einem Vernetzer zu einer formbaren Masse, Formen der formbaren Masse in ein Flächengebilde und Aushärten der formbaren Masse unter Erhalt des Flächengebildes, worin die Vorvernetzungsreaktion unterschiedlich zur Aushärtungsreaktion ist. Die Erfindung betrifft ferner eine formbare, lagerfähige Masse und ein aus dieser formbaren, lagerfähigen Masse erhältliches Flächengebilde.

Linoleum als elastischer Bodenbelag auf Basis nachwachsender Rohstoffe ist seit langem bekannt. Aufgrund seiner natürlichen Bestandteile hat Linoleum einen hohen baubiologischen und ökologischen Stellenwert erlangt. Jedoch erfordert die Herstellung von Linoleumbelägen im letzten Verfahrensschritt eine mehrere Wochen dauernde Wärmebehandlung, die sogenannte "Reifezeit". Obwohl im Stand der Technik Maßnahmen ergriffen worden sind, diese Reifezeit zu verkürzen und dadurch eine höhere Produktivität zu erreichen, sind kontinuierliche Verfahren zur Herstellung von Linoleumböden bisher nicht bekannt.

Unter anderem aus diesem Grund wurden im Stand der Technik Flächengebilde auf Basis nachwachsender Rohstoffen aus anderen Materialien beschrieben. DE 22 41 535 beschreibt beispielsweise eine Beschichtungsmasse für textile Flächengebilde auf Basis von Epoxidierungsprodukten von Estern ungesättigter Fettsäuren mit mehrwertigen aliphatischen Alkoholen.

Die bei einem derartigen Verfahren verwendeten epoxidierten Öle und Fettsäuren sind jedoch im unverarbeiteten Zustand flüssig, so daß sie im Rohzustand nicht zu Flächengebilden geformt werden können. Deshalb ist bei der Herstellung von Flächengebilden aus einem derartigen Material eine Vorvernetzung der Öle und/oder Fettsäuren zu einem höherviskosen und dadurch formbaren Zwischenprodukt (Präpolymer) üblich. Nach dem Formen zu Flächengebilden erfolgt dann eine zweite Vernetzungsstufe zum gebrauchsfähigen Material (Endvernetzung). Problematisch ist der Abbruch der ersten Vernetzungsstufe. Prinzipiell ist eine zweistufige Reaktionsführung auf folgende Weise realisierbar:
(I) Vorvernetzung, wobei einer der Vernetzungskomponenten im Unterschuß vorliegt (Epoxidierungsprodukt oder Vernetzer). Vollständige Vernetzung unter Zugabe der im Unterschuß vorliegenden Komponente.
(II) Unterschiedliche Temperaturen in den einzelnen Prozeßstufen.
(III) Verwendung verschiedener Vernetzer mit unterschiedlicher Reaktivität.
(IV) Unterschiedliche Mechanismen in den beiden Prozeßstufen.

WO 90/107607 beschreibt ein Verfahren in "zwei Reaktionsphasen", wobei in der ersten Reaktionsphase ein Gemisch aus einem Standöl mit Füllstoffen homogenisiert und mit einem Peroxid bei erhöhter Temperatur zu einem Zwischenprodukt teilpolymerisiert und teilvernetzt wird. Das gemahlene Zwischenprodukt wird anschließend mit einem elastomeren Natur- oder Kunststoff, Füllstoffen und einem Peroxid homogenisiert und wiederum bei erhöhter Temperatur vernetzt bzw. polymerisiert.

Aus der DE-A-41 35 664 sind Beschichtungsmassen bekannt, die auf nachwachsenden Rohstoffen basieren und zum Beschichten von textilen Flächengebilden oder von Releasepapier dienen. Die Beschichtungsmassen bestehen aus einer Kombination von Epoxidierungsprodukten von Estern ungesättigter Fettsäuren und Teilestern von Polycarbonsäuren mit Polyetherpolyolen sowie einem Hydrophobierungsmittel. Diese Beschichtungsmassen werden zur Herstellung von Bodenbelägen verwendet. Nachteilig ist jedoch, daß die oberste Schicht derart hergestellter Beläge sehr rauh und nicht transparent ist. Weiterhin zeigt sich, daß die Oberfläche dieser Beläge nicht genügend schmutzabweisend ist und eine schlechte Durchhärtung aufweist.

Aus der WO 96/15203 sind streichfähige Beschichtungsmassen zur Herstellung von Flächengebilden auf Basis nachwachsender Rohstoffe bekannt. Die Herstellung dieser Flächengebilde ist jedoch durch Verwendung von sogenannten "Streichpasten", welche die Beschichtungsmassen enthalten, auf Streichverfahren beschränkt.

WO 98/28356 beschreibt ein Verfahren zur Herstellung von Flächengebilden auf Basis nachwachsender Rohstoffe, wobei Flächengebilde mit befriedigenden Materialeigenschaften durch Verpressen, Kalandrieren oder Extrudieren erhalten werden können. Ein lagerfähiges Zwischenprodukt (Präpolymer) entsteht aber nur dann, wenn entweder der Vernetzer oder das Epoxidierungsprodukt im Unterschuß vorliegt. Im zweiten Vernetzungsschritt wird unter Zugabe der im Unterschuß vorliegenden Komponente das Präpolymer in das vollständig vernetzte Material überführt. Dieses Verfahren weist den Nachteil auf, daß ein nicht unerheblicher Teil der zuerst im Unterschuß zugegebenen Komponente in das bereits viskose, vorvernetzte Material eincompoundiert werden muß.

Da im Stand der Technik die der Vor- und Endvernetzung zugrunde liegenden Umsetzungen immer auf dem gleichen Reaktionsmechanismus beruhen, ist es schwierig, ein weiterverarbeitbares lagerfähiges Zwischenprodukt durch den rechtzeitigen Abbruch der Vorvernetzung oder den Einsatz einer Komponente im Unterschuß zu erhalten.

Der vorliegenden Erfindung liegt somit die Aufgabe zugrunde, ein neues Verfahren zur Herstellung eines Flächengebildes aus nachwachsenden Rohstoffen bereitzustellen, bei dem im wesentlichen jegliche Reifezeit entfällt und bei welchem der Grad der Vorvernetzung besser einstellbar ist. Ferner soll das vorvernetzte Zwischenprodukt praktisch unbegrenzt lagerfähig sein.

Diese Aufgabe wird durch die in den Ansprüchen gekennzeichneten Ausführungsformen gelöst.

Insbesondere wird ein Verfahren zur Herstellung eines Flächengebildes mit einem Polyreaktionsprodukte-enthaltenden Material bereitgestellt, umfassend die Schritte
(1) Compoundieren eines Epoxidierungsprodukts mindestens eines Carbonsäureesters mit mindestens einem Vemetzer,
(2) Vorvernetzen der in Schritt (1) erhaltenen Mischung zu einer formbaren, lagerfähigen Masse,
(3) Formen der in Schritt (2) erhaltenen formbaren, lagerfähigen Masse in ein Flächengebilde und
(4) Aushärten der formbaren Masse unter Erhalt des Flächengebildes,
worin die Vorvernetzungsreaktion in Schritt (2) unterschiedlich zur Aushärtungsreaktion in Schritt (4) ist und die Vorvernetzung im wesentlichen durch Umsetzen der Epoxygruppen des Epoxidierungsprodukts durchgeführt wird und die Aushärtung der formbaren Masse mittels peroxidischer Vernetzung über radikalische Wasserstoffabstraktion und/oder durch radikalische Polymerisation ungesättigter Doppelbindungen durchgeführt wird.

Die vorliegende Erfindung beruht auf der Erkenntis, daß die Nachteile der bekannten Verfahren durch unterschiedliche chemische Reaktionen bzw. chemische Reaktionsmechanismen des Vorvernetzens und des Aushärtens vermieden werden können. Dazu treten in dem durch das Compoundieren (1) erhaltenen Gemisch mindestens zwei verschiedene Reaktionen I und II, beispielsweise durch das Vorhandensein von mindestens zwei verschiedenen vernetzbaren Gruppen A und B, auf, wobei beim Vorvernetzen in Schritt (2) im Wesentlichen nur eine Reaktion I, beispielsweise durch Umsetzung nur einer vernetzbaren Gruppe A, d.h. eine Sorte gleichartiger vernetzbarer Gruppen, abläuft. Die von Reaktion I unterschiedliche Reaktion II läuft unter den Reaktionsbedingungen der Vorvernetzung im wesentlichen nicht ab. Beispielsweise ist die von A verschiedene Gruppe B unter den Reaktionsbedingungen der Vorvernetzung im wesentlichen stabil bzw. inert und wird in diesem Schritt im wesentlichen nicht umgesetzt. Die Reaktion I kommt beispielsweise nach dem Verbrauch, d.h. der im wesentlichen vollständigen Umsetzung, der Gruppe A unter Erhalt der formbaren Masse zum Stillstand. Ferner kann die Reaktion I nach Erreichen einer gewünschten Umsetzungsrate durch geeignete Mittel unter Erhalt der formbaren Masse abgebrochen werden.

Erfindungsgemäß kann die zweite Vernetzungsstufe, d.h. die Reaktion II, beispielsweise die Umsetzung der Gruppe B, erst durch eine Änderung der Reaktionsbedingungen ausgelöst bzw. gestartet werden. "Änderung der Reaktionsbedingungen" bedeutet im Zusammenhang mit der vorliegenden Erfindung beispielsweise eine Erhöhung der Temperatur oder eine Erhöhung oder Verminderung des Drucks, die Zugabe von eine Umsetzung startenden Mitteln, beispielsweise radikalbildenden Initiatoren, und/oder das Aussetzen des in Schritt (1) erhaltenen Gemischs oder des durch die Vorvernetzung (2) erhaltenen teilvernetzten Materials einer Bestrahlung, wie UV-, Elektronen- oder IR-Bestrahlung.

Beispielsweise kann die Vorvernetzung (2) bei einer relativ niedrigen Temperatur T₁ und gegebenenfalls Bestrahlung erfolgen, bei der die Reaktion I abläuft, wobei beispielsweise die Gruppe A mindestens teilweise umgesetzt wird, beispielsweise durch eine Veresterung oder Veretherung, eine Kondensations-, Substitutions- oder Additionsreaktion, gegebenenfalls verbunden mit einer Ringöffnung. Bei dieser Temperatur T₁ läuft im wesentlichen nicht die Reaktion II ab, beispielsweise erfolgt im wesentlichen keine Umsetzung der Gruppe B. Für die Endvernetzung kann die formbare Masse zum gegebenen Zeitpunkt auf eine höhere Temperatur T₂ erwärmt werden, bei welcher die Reaktion II, beispielsweise eine radikalische Vernetzung über die Gruppe B, ausgelöst wird, beispielsweise durch Zersetzen einer wärmeempfindlichen Gruppe B selbst oder durch einen sich erst bei einer Temperatur T₂ zersetzenden radikalischen Initiator. Ferner kann die in Schritt (1) erhaltene Mischung bei der Vorvernetzung (2) einer Bestrahlung ausgesetzt werden, beispielsweise einer UV-Bestrahlung, welche die Reaktion I, beispielsweise die Vernetzung der Gruppe A, bewirkt. Dagegen wird die Vernetzung der Gruppe B erst durch eine Temperaturerhöhung oder eine andere Art der Bestrahlung, beispielsweise IR- oder Elektronenstrahlen oder UV-Strahlung einer anderen Wellenlänge, während der Endvernetzung (4) ausgelöst. Auch die Zugabe von beispielsweise radikal- oder ionenbildenden Initiatoren oder das Aussetzen einer ein reaktives Gas, wie Sauerstoff, enthaltenden Atmosphäre kann erfindungsgemäß als eine Änderung der Reaktionsbedingungen verstanden werden.

Ein wesentlicher Vorteil der vorliegenden Erfindung liegt somit darin, daß in einer bevorzugten Ausführungsform ein Abbruch der Vorvernetzung nach vollständigem Umsatz der ersten vernetzbaren Gruppen automatisch erfolgt und ein Vernetzen mittels der zweiten vernetzbaren Gruppen über ein formbares Produkt hinaus in dieser Stufe in der Regel im wesentlichen nicht auftritt.

Vorzugsweise ist das Epoxidierungsprodukt von mindestens einem Carbonsäureester das Epoxidierungsprodukt eines oder mehrerer Ester ungesättigter Fettsäuren, vorzugsweise ein epoxidiertes natürliches Triglycerid oder ein Derivat davon. Es können beispielsweise epoxidiertes Leinöl, epoxidiertes Sojaöl, epoxidiertes Rizinusöl, epoxidiertes Rapsöl oder Vernoniaöl oder ein mindestes zwei dieser Epoxidierungsprodukte enthaltendes Gemisch davon verwendet werden. In einer Ausführungsform sind diese Epoxidierungsprodukte nur teilexpoxidiert, d.h. es verbleiben neben epoxidierten Doppelbindungen auch nicht umgesetzte Doppelbindungen in dem Carbonsäureester. Die Alkohol-Komponente dieser Carbonsäureester unterliegt keiner besonderen Beschränkung. Als Alkohol-Komponente können beispielsweise Dipropylenglykol, Propandiole, Butandiole, Hexandiole, Hexantriole, Glycerin oder Pentaerythrit, eingesetzt werden. Die Carbonsäure-Komponente unterliegt keiner besonderen Beschränkung.

Gemäß der vorliegenden Erfindung wird die in Schritt (1) erhaltene Mischung in zwei Vernetzungsschritten (2) und (4) vernetzt. Die erste Vernetzungstufe (2) dient dazu, aus beispielsweise flüssigen Rohstoffen ein formbares und lagerfähiges Zwischenprodukt herzustellen. Dieser Vernetzungsschritt (2) kann sowohl nach dem Compoundierschritt (1) als auch gleichzeitig mit dem Compoundierschritt (1) erfolgen-. Nach dem Formen (3) in ein Flächengebilde erhält das Zwischenprodukt durch die Aushärtung bzw. die zweite Vernetzungsstufe (4) seine endgültigen Gebrauchseigenschaften.

Ferner ist erfindungsgemäß die Vorvernetzungsreaktion verschieden von der Aushärtungsreaktion. Beispielsweise können bei Verwendung teilepoxidierter Carbonsäureester ungesättigter Fettsäuren in einem ersten Vernetzungsschritt die Epoxygruppen, vorzugsweise im wesentlichen vollständig, umgesetzt werden und in einem zweiten Vernetzungsschritt die verbleibenden ungesättigten Doppelbindungen beispielsweise durch radikalische Polymerisation vernetzt werden. Der zweite Vernetzungsschritt kann insbesondere auch bei der Verwendung im wesentlichen vollständig epoxidierter Carbonsäureester durch eine radikalische Wasserstoffabstraktion an dem vorvernetzen Material und Rekombination erfolgen.

Die Umsetzung der Epoxygruppen erfolgt vorzugsweise mit mindestens bifunktionellen Verbindungen, sogenannten "Vernetzern", beispielsweise durch nucleophilen Angriff und Addition an die Epoxygruppe.

Gemäß der vorliegenden Erfindung umfaßt der Begriff "Vernetzen" eine Molmassen- bzw. Molekülvergrößerung. Beispielsweise ist mit dem Begriff "Vernetzen" eine Erhöhung der Viskosität der formbaren Masse im Vergleich mit der im Schritt (1) erhaltenen Mischung verbunden.

Gemäß einer Ausführungsform der vorliegenden Erfindung werden als Reaktanden einer derartigen Umsetzung sogenannte "saure Vernetzer", d.h. Di- oder Polycarbonsäuren bzw. deren Derivate, verwendet. In einer Ausführungsform enthalten derartige Di- oder Polycarbonsäuren bzw. deren Derivate mindestens eine Doppelbindung pro Molekül. Als Dicarbonsäuren können vorzugsweise Maleinsäure, Itaconsäure, Fumarsäure, Bernsteinsäure, Methylbernsteinsäure, Äpfelsäure, Phthalsäure, Weinsäure, Citraconsäure oder Furandicarbonsäure oder ein mindestens zwei dieser Säuren enthaltendes Gemisch davon verwendet werden. Als Polycarbonsäure können vorzugsweise Säuren mit drei oder mehr Carbonsäuregruppen, wie beispielsweise Citronensäure, Aconitsäure und Trimellithsäure, eingesetzt werden.

Als Derivate der Di- oder Polycarbonsäuren können Anhydride oder Teilester oder Derivate, die mindestens eine freie Carbonsäuregruppe aufweisen, eingesetzt werden. Die Alkohol-Komponente der Teilester unterliegt keiner besonderen Beschränkung, wobei jedoch vorzugsweise Polyole wie Dipropylenglykol, Propandiole, Butandiole, Hexandiole, Hexantriole, Glycerin oder Pentaerythrit als Alkohol-Komponente eingesetzt werden.

In einer Ausführungsform wird ein Gemisch eines Teilesters aus Maleinsäureanhydrid und Dipropylenglykol zusammen mit Citronensäure als Vernetzer eingesetzt, wobei der Anteil der Citronensäure bis zu 50 Gew.-%, mehr bevorzugt bis zu 25 Gew.-%, bezogen auf die Gesamtmenge des Vernetzers, beträgt.

Es ist weiterhin möglich, die zur Aushärtung (4) benötigten vernetzbaren Gruppen durch den Vernetzer einzuführen.

Die Umsetzung des Epoxidierungsprodukts mit dem Vernetzer wird vorzugsweise thermisch und/oder durch Strahlung induziert. Im Fall einer thermischen Induktion wird die Umsetzung beispielsweise bei einer Temperatur im Bereich von Raumtemperatur bis 280°C, vorzugsweise von Raumtemperatur bis 200°C, insbesondere bis 150°C, durchgeführt. Als die Umsetzung bewirkende Strahlung kann beispielsweise UV-Strahlung, Elektronenstrahlung und/oder IR-Strahlung verwendet werden.

Eine durch UV-Strahlung bewirkte Umsetzung sollte in Gegenwart von mindestens einem UV-Initiator durchgeführt werden, bei Verwendung von Elektronenstrahlung kann die Zugabe mindestens eines UV-Initiators auch unterbleiben. Die erfindungsgemäß verwendbaren UV-Initiatoren können radikalische oder kationische UV-Initiatoren oder ein Gemisch dieser UV-Initiatortypen sein. Bevorzugte Beispiele radikalischer UV-Initiatoren sind Benzophenon, Benzophenon-Derivate, Phosphinoxide, α-Morpholinoketone, Chinon, Chinon-Derivate oder α-Hydroxyketone, oder Gemische davon. Bevorzugte Beispiele kationischer UV-Initiatoren sind Triarylsulfoniumsalze, die von einem Typ sind oder als Gemisch verschiedener Triarylsulfoniumsalze vorliegen können, oder Diaryliodoniumsalze, oder Gemische davon. Die UV-Initiatoren liegen beispielsweise in einer Menge von bis zu 15 Gew.-%, vorzugsweise 0,05 bis 8 Gew.-%, bezogen auf die Menge des Polyreaktionsprodukte enthaltenden Materials, vor.

In einer erfindungsgemäßen Ausführungsform kann neben dem UV-Initiator mindestens ein Photosensibilisator, wie beispielsweise Verbindungen auf der Basis von Anthracen, Perylen oder Thioxanthen-9-on, vorliegen, welcher den UV-Initiator aktivieren und dessen Wirkung verstärken kann. Dadurch kann die Konzentration des UV-Initiators reduziert werden. Die erfindungsgemäß eingesetzte UV-Strahlung liegt im allgemein üblichen Bereich, d.h. zwischen 200 nm und 380 nm. Die erfindungsgemäß eingesetzte IR-Strahlung liegt im allgemein üblichen Bereich, beispielsweise 760 nm bis 0,5 mm.

Das Polyreaktionsprodukte-enthaltende Material umfaßt vorzugsweise 10 bis 99 Gew.-% Bindemittel, bezogen auf die Gesamtmenge des Polyreaktionsprodukte-enthaltenden Materials. Der Begriff "Bindemittel" umfaßt dabei die vernetzenden Komponenten Monomer bzw. Präpolymer und Vernetzer. In der im Schritt (1) erhaltenen Mischung betragen vorzugsweise die Gewichtsmengen des Vernetzers und des Epoxidierungsprodukts jeweils 5 bis 80 Gew.-%, bezogen auf die Gesamtmenge des Polyreaktionsprodukte-enthaltenden Materials.

Ferner können im Compoundier-Schritt (1) weitere Zusatzstoffe bzw. Komponenten, wie Füllstoffe, Titandioxid, Pigmente zur Dessinierung, Hydrophobierungsmittel, Hilfsstoffe und eventuell Co-Vernetzer, wie beispielsweise Triallylisocyanurat, Triallylcyanurat, Ethylenglycol-dimethacrylat, Trimethylolpropan-trimethacrylat und m-Phenylen-bis-maleinimid, beigemischt werden. Die Füllstoffe sind vorzugsweise Holzmehl, Kreide, Korkmehl, Bariumsulfat, Kieselsäure, Kaolin, Quarz-Kaolinit-Gemisch, Talkum, Glas, Textil- oder Glasfasern oder Pflanzenfasern, Cellulosefasern, Polyesterfasern, nanoskalige "intelligente" Füllstoffe wie organisch modifizierte Bentonite. Besonders bevorzugt ist Holzmehl, Kreide oder Korkmehl als Füllstoff. Als Hilfsstoffe können beispielsweise Tallöle, synthetische oder natürliche Harze, wie beispielsweise Balsamharz, Kopale, Kohlenwasserstoffharze, und/oder Sikkative, wie beispielsweise Verbindungen der Metalle Al, Li, Ca, Ba, Fe, Mg, Mn, Pb, Zn, Zr, Ce, Sn oder Co oder eine mindestens zwei dieser Verbindungen enthaltende Kombination davon, verwendet werden.

Durch die Vorvernetzung (2) der teilweise flüssigen Komponenten weist das entstandene Zwischenprodukt einen bestimmten Vorvernetzungsgrad und quasi thermoplastische Eigenschaften auf und ist dadurch formbar. Da die Reaktion I, beispielsweise die Umsetzung der ersten vernetzbaren Gruppen A, im wesentlichen vollständig abläuft und eine Aushärtung erfindungsgemäß nur durch Änderung der Reaktionsbedingungen durch Auslösen einer Reaktion II, beispielsweise dem Vernetzen zweiter vernetzbarer Gruppen B, erfolgen kann, ist das formbare Zwischenprodukt überraschenderweise praktisch unbegrenzt lagerfähig. Das teilweise ausgehärtete Material kann nach der Vorvernetzungsstufe (2) zerkleinert werden (granuliert oder gemahlen) und kann beispielsweise in Pulverform gelagert werden.

Der Begriff "formbare Masse" als Zwischenprodukt bedeutet in diesem Zusammenhang sowohl ein nahezu flüssiges Reaktionsprodukt als auch ein hochviskoses Reaktionsprodukt als Bindemittel. Der Vernetzungsgrad der in Schritt (2) erhaltenen vorvernetzten formbaren Masse ist gemäß der vorliegenden Erfindung kleiner als der Vernetzungsgrad des nach dem Aushärten (4) erhaltenen Polyreaktionsprodukte-enthaltenden Materials in Form eines Flächengebildes.

Der Vernetzungsgrad der formbaren Masse kann durch das Verhältnis der Anzahl an ersten vernetzbaren Gruppen zu der Anzahl an zweiten vernetzbaren Gruppen gesteuert werden, ohne die Gesamtzahl der vernetzenden Gruppen und damit den Vernetzungsgrad des Endprodukts im wesentlichen zu beeinflussen. Ist die relative Anzahl an ersten vernetzbaren Gruppen relativ gering, so wird ein eher niedrig viskose formbare Masse als Zwischenprodukt erhalten. Ist die relative Anzahl an ersten vernetzbaren Gruppen höher, so wird ein Zwischenprodukt einer festeren Konsistenz erhalten, welches beispielsweise als Granulat oder Pulver verarbeitet werden kann. Im Fall der Epoxidierungsprodukte von Carbonsäureestern ungesättigter Fettsäuren kann das Verhältnis von Epoxygruppen zu ungesättigten Doppelbindungen beispielsweise durch den Epoxidierungsgrad oder bei der Vernetzung durch Wasserstoffabstraktion durch die Peroxiddosierung gesteuert werden.

Ferner wird die Konsistenz der in Schritt (2) erhaltenen, formbaren Masse dadurch beeinflußt, ob beispielsweise ein bi- oder trifunktioneller Vernetzer eingesetzt wird. Selbstverständlich hängt die Konsistenz auch von der Art und Menge weiterer eincompoundierter Komponenten, wie beispielsweise den Füllstoffen, ab.

Ein Vorteil des erfindungsgemäßen Verfahrens ist daher, daß die in Schritt (2) erhaltene formbare vorvernetzte Masse mittels herkömmlicher Verfahren, wie Verpressen, Kalandrieren oder Extrudieren, in ein Flächengebilde verarbeitet werden kann.

Das Formen (3) der compoundierten Masse kann vor dem Aushärten (4) oder gleichzeitig mit dem Aushärten (4) durchgeführt werden. Die Formgebung der vorvernetzen Masse kann in den gängigen Verarbeitungsanlagen wie Pressen, Doppelbandpressen, Kalandern, Auma, einer Thermofixanlage oder mittels eines Extruders, beispielsweise mit Breitschlitzdüse, erfolgen. In die erhaltene Materialbahn können ferner zur Dessinierung andersfarbige Chips bzw. Granulate eines ansonsten im wesentlichen gleichen Materials eingestreut werden, wonach der Bahn dann beispielsweise in einem Kalander, Auma, Thermofixanlage, usw. die endgültige Form gegeben werden kann.

Des weiteren kann eine Dessiniermethode eingesetzt werden, worin vor der Aushärtung (4) ein bemustertes bzw. bedrucktes, saugfähiges Material auf die als Flächengebilde geformte Masse aufgebracht wird. Um Spannungen im Flächengebilde zu vermeiden, kann gegebenenfalls auf der Rückseite ein gleichartiges, gegebenenfalls bedrucktes Material als Gegenzug aufgebracht werden. Das saugfähige Material ist vorzugsweise ein Cellulosevlies aus beispielsweise Cellulose-Regeneratfasern mit hoher spezifischer Oberfläche, welches sich durch hohes Saugvermögen, hohe Trocken- und Naßfestigkeit sowie geringen Schrumpf auszeichnet. Die Quadratmetergewichte solcher Cellulosevliese betragen beispielsweise 25 bis 50 g/m². Beim darauffolgenden Verpressen durchdringt ein Teil des erfindungsgemäßen, noch nicht vollständig vernetzten Bindemittels das saugfähige Material und bildet nach Aushärtung eine dünne Deck- bzw. Nutzschicht, die gegebenenfalls mit den üblichen Verfahren lackiert werden kann, auf der Oberseite des derartig dessinierten Flächengebildes, wobei die Deck- bzw. Nutzschicht das bemusterte bzw, bedruckte Material vor Abrieb schützt. Ein Vorteil einer solchen, einstufigen Dessiniermethode liegt unter anderem darin, daß ein aus dem vorstehend definierten Material aufgebautes Flächengebilde beliebig bedruckbar ist, was beispielsweise für Flächengebilde aus Linoleum nicht zutrifft.

Gemäß der vorliegenden Erfindung kann das Zwischenprodukt nach oder gleichzeitig mit dem Formen in einer zweiten Vernetzungsstufe weiter vernetzt und ausgehärtet werden. Das Aushärten (4) kann mittels herkömmlicher Verfahren wie Verpressen beispielsweise über eine Backenpresse, Auma, Doppelbandpresse, Kalanderverfahren oder einfaches Durchlassen durch einen Heizkanal oder einer Kombination dieser Verfahren, gegebenenfalls unter Erhöhung der Temperatur, erhalten werden.

Gemäß einer Ausführungsform kann die Aushärtung (4) mittels peroxidischer Vernetzung über eine radikalische Wasserstoffabstraktion erfolgen. Bei dieser Reaktion zerfällt ein zugesetzter radikalischer Initiator unter Bildung von Radikalen. Jedes direkt oder in einer Folgereaktion entstandene Radikal kann dem vorvernetzen Material ein Wasserstoff entziehen und sich dadurch absättigen. Es entsteht zugleich eine Radikalstelle an einem Makromolekül des vorvernetzen Materials. Zwei so gebildete makromolekulare Radikale können sich unter Ausbildung einer neuen C-C-Bindung verknüpfen. Durch mehrmaliges Wiederholen dieses Vorgangs entsteht aus dem vorvernetzen Material das endvernetzte Polyreaktionsprodukte-enthaltende Material. Die Geschwindigkeit dieser Reaktion wird durch den Peroxidzerfall bestimmt. Da eine derartige peroxidische Vernetzung nicht als Kettenreaktion, sondern stöchiometrisch abläuft, läßt sich der Grad der Endvernetzung durch die Dosierung des Peroxids steuern. Die erforderliche Zusatzmenge des Peroxids hängt mit dem gewünschten Endeigenschaften des Polyreaktionsprodukte-enthaltenden Materials, dem Peroxidtyp, der Lieferform und der Art und Menge der weiteren Zusatzstoffe ab. Vorzugsweise werden 0,05 bis 10 Gew.-% Peroxid, insbesondere 0,5 bis 10 Gew.-%, bezogen auf das Gewicht des Bindemittels, verwendet. Bevorzugte Peroxide sind Acylperoxide, Perketale und Aryl-, Alky- und Aralkylperoxide, bzw. Peroxide, welche Aroyl-, Phenyl-, Alkoxy-, Aralkoxy- und primäre Alkylradikale freisetzen. Besonderes bevorzugt sind beispielsweise Dicumylperoxid, tert.-Butylcumylperoxid, Di(2-tert.-butylperoxy-isopropyl)benzol,Di(tert.-butyl)peroxid,1,1-Di(tert.-butyl-peroxy)-3,3,5-trimethylcyclohexan, 2,5-Bis(tert.-butylperoxy)-2,5-dimethylhexan und 2,5-Bis-(tert.-butylperoxy)-2,5-dimethylhexin(3). Ferner kann die Vernetzung durch Zugabe von Schwefel oder Silicium-Verbindungen alleine oder in Kombination mit den vorstehend aufgeführten Peroxiden erfolgen. Die Induktion der Peroxidzerfallsreaktion kann sowohl thermisch als auch strahlungsinduziert, beispielsweise durch UV-Strahlung, erfolgen. Vorzugsweise wird diese Reaktion thermisch eingeleitet. Wenn die Peroxide bereits in der Mischung enthalten sind, sollte das vorvernetzte Material vor der eigentlichen Vernetzung nicht über eine Temperatur erhitzt werden, bei der innerhalb der üblichen Reaktionszeit noch keinerlei oder keine wesentliche Vernetzung zu beobachten ist (die sogenannte Scorch-Temperatur).

Gemäß einer weiteren Ausführungsform besteht die Aushärtungsreaktion in einer radikalischen Vernetzung der freien Doppelbindungen des teilepoxidierten Carbonsäureesters oder der Doppelbindungen des Vernetzers. Als radikalbildende Initiatoren bzw. Starter für die Aushärtung (4) können insbesondere üblicherweise als radikalische Initiatoren verwendete organische Peroxide oder Azobisverbindungen in den üblichen Anwendungsformen eingesetzt werden. Dies sind beispielsweise Hydroperoxide, wie Cumolhydroperoxid und t-Butylhydroperoxid, Peroxyester, wie t-Butylperoxybenzoat, t-Butylperoxy-3,5,5-trimethylhexanoat, t-Butylperoctoat und Dimyristylperoxydicarbonat, Peroxyketale, wie 1,1-Bis(t-butylperoxy)-3,3, 5-trimethylcyclohexan und 1,1-Bis(t-butylperoxy)cyclohexan, Dialkylperazide und Diaralkylperoxide, wie Di-t-amylperoxid, Dicumylperoxid und 2,5-Bis(t-butylperoxy)-2,5-dimethylhexan und -hexin(3), und Azobisverbindungen, wie 2,2'-Azo-bis(2-acetoxypropan) und 2,2'-Azo-bis(2-methylpropionitril). Die Initiation der Radikalkettenreaktion kann sowohl thermisch als auch strahlungsinduziert, beispielsweise durch UV-Strahlung, erfolgen.

Vorzugsweise wird der radikalbildende Initiator als Gemisch mit einem Mineralöl mit den anderen Komponenten vermischt. Ein derartiges Mineralöl wirkt als Benetzungsmittel für das Granulat und kann gleichzeitig eine phlegmatisierende Wirkung haben.

Der radikalbildende Initiator kann wahlweise in der Compoundierstufe (1) und/oder vor der Vorvernetzung (2) und/oder vor dem Formen des Flächengebildes (3) in einer zweiten, optionalen Compoundierstufe mit den übrigen Komponenten des Materials compoundiert werden, er kann aber auch vor beiden Vernetzungsstufen eincompoundiert werden. Der radikalbildende Initiator, beispielsweise eines der vorgenannten Peroxide, kann auch bereits vor der Formgebung auf die Oberfläche des entsprechenden Materials im wesentlichen oberflächig, z. B. durch Aufsprühen, aufgebracht werden. Gegebenenfalls können Peroxide mit unterschiedlichen Halbwertszeiten und/oder Zersetzungstemperaturen zugegeben werden, so daß beispielsweise eine Zersetzung des im zweiten Vernetzungschritt (4) zur Aushärtung benötigten Peroxids während der ersten Vernetzungsstufe (2) des erfindungsgemäßen Verfahrens nicht eintritt.

Die Compoundierung (1) der Komponenten erfolgt vorzugsweise in einem Extruder oder Kneter. Ferner kann das erfindungsgemäße Verfahren gegebenenfalls eine zweite Compoundierstufe, beispielsweise den Zusatz von Peroxid, vor dem Formen des Flächengebildes umfassen.

Die durch das erfindungsgemäße Verfahren erhaltenen Flächengebilde sind überraschenderweise im wesentlichen ohne eine weitere Reifung durch den ganzen Querschnitt des Flächengebildes vernetzt, nicht klebrig, flexibel und besitzen eine hohe Biegerückstellkraft, d.h. sie sind nach der Herstellung direkt gebrauchsfähig. So kann durch den Wegfall des Reifungsvorgangs das erfindungsgemäße Verfahren kontinuierlich durchgeführt werden.

Gegebenfalls kann das erfindungsgemäße Verfahren noch eine Dessinierstufe des ausgehärteten Flächengebildes, beispielsweise durch das im Stand der Technik bekannte Thermotransferdruckverfahren, umfassen.

Die vorliegende Erfindung betrifft ferner eine formbare, lagerstabile Masse, wie sie durch die Schritte (1) und (2) des erfindungsgemäßen Verfahrens erhältlich ist. Die Zusammensetzung dieses Zwischenprodukts ist wie vorstehend beschrieben.

Des weiteren betrifft die Erfindung ein aus der erfindungsgemäßen formbaren, lagerstabilen Masse durch Formen und Aushärten erhältliches Flächengebilde.

Die durch das erfindungsgemäße Verfahren hergestellten Flächengebilde werden vorzugsweise als Boden- oder Wandbeläge verwendet. Dabei können die Flächengebilde in homogener Form vorliegen, oder das vorvernetzte Material kann auf einen Träger, wie beispielsweise Glasvlies, Pappe, Jutegewebe oder ein Träger auf Basis von Jute, wie beispielsweise Mischungen von Jutevlies und Polypropylen-Polyestervlies, aufgebracht werden.

Die vorliegende Erfindung wird durch das nachfolgende Beispiel näher erläutert.

### Beispiel

| | | | |
|---|---|---|---|
| Rezeptur: | 41,0 | Gew.% | expoxidiertes natürliches Triglycerid |
| | 8,2 | Gew.-% | saurer Vernetzer |
| | 41,0 | Gew.-% | Füllstoffe |
| | 8,2 | Gew.-% | Weißpigment |
| | 1,6 | Gew.-% | Peroxid/Mineralölmischung (1:2) |

### Durchführung:

Die festen Stoffe werden zusammen eingewogen und gemischt, parallel dazu wird die Peroxid/Mineralölmischung in das epoxidierte natürliche Triglycerid gegeben und vermischt. Dann vereinigt man die beiden Mischungen und homogenisiert sie innerhalb von 5 min mit einem Labordissolver. Anschließend härtet man in einer ersten Stufe auf einem Meßkneter innerhalb 25 min. bei 160°C. Aus der so erhaltenen, noch formbaren Masse werden in einer hydraulischen Zweibackenpresse mit Hilfe eines 1,5 mm dicken Metallrahmens mit einer Fläche von 169 cm² und eines Silikon-Trenngewebes gepreßte Platten hergestellt. Dabei beträgt der Stempeldruck der Presse etwa 30 bar, die Temperatur der Backen 200°C und die Vernetzungsdauer 15 min.

Die so erhaltenen Platten sind durch den ganzen Querschnitt vernetzt, nicht klebrig, flexibel und besitzen eine hohe Biegerückstellkraft.

## Patentansprüche

1. Verfahren zur Herstellung eines Flächengebildes mit einem Polyreaktionsprodukte-enthaltenden Material, umfassend die Schritte
(1) Compoundieren eines Epoxidierungsprodukts mindestens eines Carbonsäureesters mit mindestens einem Vemetzer,
(2) Vorvernetzen der in Schritt (1) erhaltenen Mischung zu einer formbaren, lagerfähigen Masse,
(3) Formen der in Schritt (2) erhaltenen formbaren, lagerfähigen Masse in ein Flächengebilde und
(4) Aushärten der formbaren Masse unter Erhalt des Flächengebildes,
worin die Vorvernetzungsreaktion in Schritt (2) unterschiedlich zur Aushärtungsreaktion in Schritt (4) ist und die Vorvernetzung im wesentlichen durch Umsetzen der Epoxygruppen des Epoxidierungsprodukts durchgeführt wird und die Aushärtung der formbaren Masse mittels peroxidischer Vernetzung über radikalische Wasserstoffabstraktion und/oder durch radikalische Polymerisation ungesättigter Doppelbindungen durchgeführt wird.

2. Verfahren nach Anspruch 1, worin als Epoxidierungsprodukt ein epoxidierter Carbonsäureester ungesättigter Fettsäuren verwendet wird.

3. Verfahren nach Anspruch 1 oder 2, worin als Epoxidierungsprodukt epoxidiertes Leinöl, epoxidiertes Sojaöl, epoxidiertes Rizinusöl, epoxidiertes Rapsöl oder Vernoniaöl oder ein Gemisch von mindestens zwei unterschiedlichen Epoxidierungsprodukten davon verwendet wird.

4. Verfahren nach einem der Ansprüche 1 bis 3, worin als Vernetzer eine Di- oder Polycarbonsäure oder ein Derivat davon oder ein Gemisch, enthaltend mindestens zwei verschiedene Vernetzer, verwendet wird.

5. Verfahren nach Anspruch 4, worin als Dicarbonsäure Maleinsäure, Itaconsäure, Fumarsäure, Bernsteinsäure, Methylbernsteinsäure, Äpfelsäure, Phthalsäure, Weinsäure, Citraconsäure oder Furandicarbonsäure oder ein Gemisch mindestens zweier dieser Säuren verwendet wird.

6. Verfahren nach Anspruch 4, worin als Polycarbonsäure Citronensäure, Trimellithsäure oder Aconitsäure verwendet wird.

7. Verfahren nach einem der Ansprüche 4 bis 6, worin als Derivat einer Di- oder Polycarbonsäure ein Anhydrid oder Teilester verwendet wird.

8. Verfahren nach einem der vorhergehenden Ansprüche, worin die Umsetzung des Epoxidierungsprodukts mit dem Vernetzer thermisch und/oder durch Strahlung bewirkt wird.

9. Verfahren nach Anspruch 8, worin die durch Strahlung bewirkte Umsetzung mittels UV-Strahlung in Gegenwart von mindestens einem UV-Initiator und/oder mittels Elektronenstrahlung gegebenenfalls in Gegenwart von mindestens einem UV-Initiator und/oder mittels IR-Strahlung erfolgt.

10. Verfahren nach einem der vorhergehenden Ansprüche, welches vor Schritt (3) eine weitere Compoundierstufe umfaßt.

11. Verfahren nach einem der vorhergehenden Ansprüche, worin in Schritt (1) oder vor Schritt (3) mindestens ein weiterer Zusatzstoff aus der Gruppe, bestehend aus Füllstoffen, Pigmenten, Hydrophobierungsmitteln und Hiffsstoffen, eincompoundiert wird.

12. Verfahren nach Anspruch 11, worin die Wasserstoffabstraktion und/oder die radikalische Polymerisation der ungesättigten Doppelbindungen durch radikalbildende Initiatoren, ausgewählt aus organischen Peroxiden oder Azobisverbindungen oder einem Gemisch davon, initiiert wird.

13. Verfahren nach Anspruch 12, worin die radikalbildenden Initiatoren in Schritt (1) und/oder vor Schritt (2) und/oder vor Schritt (3) eincompoundiert werden.

14. Verfahren nach einem der vorhergehenden Ansprüche, worin das Vorvernetzen und das Aushärten bei unterschiedlichen Temperaturen durchgeführt werden.

15. Formbare, lagerfähige Masse, erhältlich durch die Schritte (1) und (2) des wie in den Ansprüchen 1 bis 14 definierten Verfahrens.

16. Flächengebilde, erhältlich durch das wie in den Ansprüchen 1 bis 14 definierte Verfahren.

## Claims

1. Method of producing a flat article comprising a material that contains polyreaction products, comprising the steps of
(1) compounding an epoxidation product of at least one carboxylic ester with at least one crosslinker,
(2) pre-crosslinking the mixture obtained in step (1) to form a mouldable storable mass,
(3) moulding the mouldable storable mass obtained in step (2) into a flat article, and
(4) curing the mouldable mass to obtain the flat article,
wherein the pre-crosslinking reaction in step (2) is different to the curing reaction in step (4) and the pre-crosslinking is essentially carried out by reacting the epoxy groups of the epoxidation product and the curing of the mouldable mass is carried out by means of peroxidic crosslinking via radical hydrogen abstraction and/or by radical polymerization of unsaturated double bonds.

2. Method according to Claim 1, wherein an epoxidized carboxylic ester of unsaturated fatty acids is used as epoxidation product.

3. Method according to Claim 1 or 2, wherein epoxidized linseed oil, epoxidized soybean oil, epoxidized castor oil, epoxidized rapeseed oil or vernonia oil or a mixture of at least two different epoxidation products thereof is used as epoxidation product.

4. Method according to any one of Claims 1 to 3, wherein a di- or polycarboxylic acid or a derivative thereof or a mixture containing at least two different crosslinkers is used as crosslinker.

5. Method according to Claim 4, wherein maleic acid, itaconic acid, fumaric acid, succinic acid, methylsuccinic acid, malic acid, phthalic acid, tartaric acid, citraconic acid or furandicarboxylic acid or a mixture of at least two of these acids is used as dicarboxylic acid.

6. Method according to Claim 4, wherein citric acid, trimellitic acid or aconitic acid is used as polycarboxylic acid.

7. Method according to any one of Claims 4 to 6, wherein an anhydride or partial ester is used as derivative of a di- or polycarboxylic acid.

8. Method according to any one of the preceding claims, wherein the reaction of the epoxidation product with the crosslinker is induced thermally and/or by radiation.

9. Method according to Claim 8, wherein the reaction induced by radiation is effected using UV radiation in the presence of at least one UV initiator and/or by using electron beam radiation optionally in the presence of at least one UV initiator, and/or by using IR radiation.

10. Method according to any one of the preceding claims, which comprises a further compounding stage before step (3).

11. Method according to any one of the preceding claims, wherein at least one further additive from the group consisting of fillers, pigments, hydrophobing agents and auxiliary agents is incorporated by compounding in step (1) or before step (3).

12. Method according to Claim 11, wherein the hydrogen abstraction and/or the radical polymerization of unsaturated double bonds is initiated by radical-forming initiators selected from organic peroxides or azobis compounds or a mixture thereof.

13. Method according to Claim 12, wherein the radical-forming initiators are incorporated by compounding in step (1) and/or before step (2) and/or before step (3).

14. Method according to any one of the preceding claims, wherein the pre-crosslinking and the curing are carried out at different temperatures.

15. Mouldable storable mass obtainable by steps (1) and (2) of the method defined in Claims 1 to 14.

16. Flat article obtainable by the method defined in Claims 1 to 14.

## Revendications

1. Procédé de fabrication d'une structure plane avec un matériau contenant des produits de polyréaction, comprenant les étapes de :
(1) mélange d'un produit d'époxydation d'au moins d'un ester d'acide carboxylique avec au moins un agent de réticulation,
(2) préréticulation du mélange obtenu à l'étape
(1) en une masse ductile et stockable,
(3) mise en forme de la masse ductile et stockable obtenue à l'étape (2) en une structure plane, et
(4) polymérisation de la masse ductile à l'obtention de la structure plane,
dans lequel la réaction de préréticulation à l'étape (2) est différente de la réaction de polymérisation à l'étape (4) et où la préréticulation est effectuée essentiellement par réaction des groupes époxydes du produit d'époxydation, et la polymérisation de la masse ductile est effectuée au moyen d'une réticulation par péroxydation par arrachement radicalaire d'hydrogène et/ou par polymérisation radicalaire de doubles liaisons insaturées.

2. Procédé selon la revendication 1 dans lequel on utilise comme produit d'époxydation un ester époxydé d'acide gras insaturé.

3. Procédé selon la revendication 1 ou 2 dans lequel on utilise comme produit d'époxydation de l'huile de lin époxydée, de l'huile de soja époxydée, de l'huile de ricin époxydée, de l'huile de colza ou de l'huile de vernonia époxydée, ou un mélange d'au moins deux produits d'époxydation différents de ces huiles.

4. Procédé selon l'une quelconque des revendications 1 à 3 dans lequel on utilise comme agent de réticulation un acide di-/polycarboxylique ou un dérivé de celui-ci ou un mélange contenant au moins deux agents différents de réticulation.

5. Procédé selon la revendication 4 dans lequel on utilise comme acide dicarboxylique de l'acide maléique, de l'acide itaconique, de l'acide fumarique, de l'acide succinique, de l'acide méthylsuccinique, de l'acide malique, de l'acide phtalique, de l'acide tartrique, de l'acide citraconique ou de l'acide furanedicarboxylique ou un mélange d'au moins deux de ces acides.

6. Procédé selon la revendication 4 dans lequel on utilise comme acide polycarboxylique de l'acide citrique, de l'acide trimellitique ou de l'acide aconitique.

7. Procédé selon l'une quelconque des revendications 4 à 6 dans lequel on utilise comme dérivé d'un acide di-/polycarboxylique un anhydride ou un ester partiel.

8. Procédé selon l'une quelconque des revendications précédentes dans lequel la réaction du produit d'époxydation est effectuée avec un agent de réticulation par voie thermique et/ou sous l'action d'un rayonnement.

9. Procédé selon la revendication 8 dans lequel la réaction effectuée sous l'action d'un rayonnement a lieu au moyen d'un rayonnement UV en présence d'au moins un amorceur UV et/ou au moyen d'un rayonnement électronique, le cas échéant en présence d'au moins un amorceur UV et/ou au moyen d'un rayonnement IR.

10. Procédé selon l'une quelconque des revendications précédentes qui comprend avant l'étape (3) une autre étape de mélange.

11. Procédé selon l'une quelconque des revendications précédentes dans lequel est incorporé à l'étape (1) ou avant l'étape (3) au moins un autre additif issu du groupe se composant de matières de charge, de pigments, de produits d'imperméabilisation et d'adjuvants.

12. Procédé selon la revendication 11 dans lequel l'arrachement d'hydrogène et/ou la polymérisation radicalaire des doubles liaisons insaturées sont initiés par des initiateurs créateurs de radicaux choisis parmi des peroxydes organiques ou des composés azo ou un mélange de ceux-ci.

13. Procédé selon la revendication 12 dans lequel les initiateurs créateurs de radicaux sont incorporés à l'étape (1) et/ou avant l'étape (2) et/ou avant l'étape (3).

14. Procédé selon l'une quelconque des revendications précédentes dans lequel la préréticulation et la polymérisation sont effectuées à des températures différentes.

15. Masse ductile et stockable pouvant être obtenue par les étapes (1) et (2) du procédé défini comme dans les revendications 1 jusqu'à 14.

16. Structure plane pouvant être obtenue par le procédé défini comme dans les revendications 1 jusqu'à 14.
